# EUROPÄISCHE PATENTANMELDUNG

(11) **EP 0 790 569 A2**
(43) Veröffentlichungstag der Anmeldung: **20.08.1997**
(21) Anmeldenummer: 96120021.9
(22) Anmeldetag: 13.12.1996
(51) Int. Cl.: G06K 7/00, G06K 19/07

(54) **Erweiterte elektronische Chipkarteneinrichtung**

(30) Priorität: 15.02.1996 DE 29602609 U
(71) Anmelder: ROBERT BOSCH GMBH, 70442 Stuttgart (DE)
(72) Erfinder: Weigl, Andreas, 76351 Linkenheim-Hochstetten (DE); Weiss, Karl-Ernst, 76275 Ettlingen (DE); Schramm, Dieter, 70469 Stuttgart (DE); Hugel, Robert, 76199 Karlsruhe (DE); Prohaska, Werner, 77833 Ottersweier (DE); Weyerstall, Bernd, 42369 Wuppertal (DE); Budde, Ulrich, 51702 Bergneustadt (DE)
(74) Vertreter: Patentanwälte Gesthuysen, von Rohr, Weidener, Schüll, Häckel

(57) **Zusammenfassung**

Es wird eine erweiterte elektronische Chipkarteneinrichtung mit einem Chipträger (10), einem Chip, einer Stromversorgungseinheit (1), einer Zentralsteuereinheit (2) einer Datenaustauscheinheit (3) vorgeschlagen, die dem Datenaustausch zwischen der Chipkarteneinrichtung und einer Gegenstation dient. Um vorhandene, austauschbare passive, normgerechte Chipkarten (10) bei der erweiterten Chipkarteneinrichtung mit verwenden zu können, wird diese in der Weise ausgeführt, daß sie einerseits eine Kartenhalterung (13) mit einer Chipdatenaustauscheinheit (14) für die dort entnehmbare Chipkarte (10) und andererseits eine Aufnahmeeinheit (11) mit den vorgenannten weiteren Einheiten (1, 2, 3) der Chipkarteneinrichtung aufweist.

## Beschreibung

Die Erfindung betrifft eine erweiterte elektronische Chipkarteneinrichtung mit den Merkmalen des Oberbegriffs von Anspruch 1.

Magnetstreifenkarten sind schon seit langem für eine Vielzahl von Einsatzfällen, insbesondere als Kreditkarten bekannt. Diese Magnetstreifenkarten werden mittlerweile für eine breite Palette von Anwendungen eingesetzt und haben dementsprechend weite Verbreitung gefunden. Die nächste Stufe der Kartenentwicklung ist mit Chipkarten erreicht worden, Karten in Kreditkartenformat, die auf einem Chipträger einen Chip oder mehrere Chips tragen. Solche Chipkarten haben mittlerweile weite Verbreitung als Telefonkarten, als Zugangsberechtigungskarten, als Nutzungskarten für Mobiltelefone gefunden, und der Anwendungsbereich von Chipkarten (kontaktgebunden oder kontaktlos) wächst explosionsartig.

Magnetkarten und Chipkarten sind seit längerem in ihren Abmessungen und der Anordnung von Magnetstreifen und Kontakten etc. genormt, derartige normgerechte Chipkarten (ISO-konforme Karten) können in alle entsprechend genormten Kartenschächte eingeführt werden.

Bisherige normgerechte Chipkarten sind unter bestimmten Randbedingungen nur begrenzt einsetzbar, insbesondere unter Berücksichtigung der Tatsache, daß größere Entfernungen zwischen der Chipkarte und einem angesprochenen Objekt für die Datenübertragung nur schwer zu überbrücken sind. Zusatzfunktionen wie das Speichern von Daten, gezielte Abfrage von Daten ohne externe Hilfseinrichtungen (Transponderfunktion) sind häufig nur schwierig zu realisieren. Ein besonderes Problem stellt dabei eine integrierte, eine langfristige Einsetzbarkeit der Chipkarte gewährleistende Stromversorgung dar, die in den Abmessungsvorgaben von normgerechten Chipkarten regelmäßig nicht unterzubringen ist.

Eine besondere Entwicklung hat der Bereich Chipkarten in der Automobiltechnik genommen, in Besonderheit zunächst für fest eingebaute oder herausnehmbare Mobiltelefone. Künftig werden Fahrzeugsicherungssysteme erwartet, die höchste Sicherheit mit höchstem Bedienungskomfort verbinden. In dieser Richtung zeigt die Entwicklung der Smart Card durch die Siemens AG, ein Kartensystem, das nicht nur für Fahrzeugsicherungssysteme, sondern ganz breit für alle möglichen Anwendungsfelder eingesetzt werden kann.

Mit dem Konzept der Smart Card (Siemens Zeitschrift, Sonderheft SPECIAL FuE, Frühjahr 95, Seiten 24-27) wird ein Weg eingeschlagen, der aus einer passiven Chipkarte eine erweitere elektronische Chipkarteneinrichtung werden läßt, mit Transponder, Langwellen-Detektor, UHF-Sender, Mikroprozessor, Kodiereinheit, nicht flüchtigen Speichern, Bedien- und Anzeigeelementen. Diese elektronischen Chipkarteneinrichtungen haben in der Fläche weiterhin Kreditkartenformat, sind aber erheblich dicker als die passiven ISO-genormten Chipkarten. Anders kann man natürlich die weiteren Baugruppen wie Stromversorgungseinheit, Datenaustauscheinheit, Bedienungselemente, Anzeigedemente etc. nicht integrieren. Der Nutzer einer solchen erweiterten elektronischen Chipkarteneinrichtung führt diese nicht in einen Kartenschacht einer Gegenstation ein, sondern begibt sich nur mit der elektronischen Chipkarteneinrichtung in den Empfindlichkeitsbereich der Gegenstation.

Bei der zuvor erläuterten erweiterten elektronischen Chipkarteneinrichtung kann man im Nahfeld oder im weiteren Umfeld arbeiten, lokal oder global Funktionen auslösen etc. Erläutert werden in diesem Zusammenhang entsprechende Challenge/Response-Verfahren über Induktiv-Antennen mit begrenztem Funktionsradius, unter Einsatz von Langwellen-Sendern und Empfängern in weiteren Funktionsradien, Aktivierung und Deaktivierung verschiedener Chipkarteneinrichtungen unter unterschiedlichsten Aspekten, Funktionsabruf und Programmierung der Chipkarteneinrichtung über Bedienungselemente (Tasten) und Anzeigeelemente (LED, LCD-Display etc.). Es wird weiter erläutert, daß mit derartigen Chipkarteneinrichtungen und entsprechend leistungsfähigen Steuerungseinheiten auch ausgefeilte Verschlüsselungs- und Authentisierungsalgorithmen ausgeführt werden können, wenn man entsprechend leistungsfähige Stromversorgungseinheiten einsetzt. Weite Anwendungsfelder für derartige Chipkarteneinrichtungen werden aufgezeigt, von Betriebs-, Service- und Diagnosedaten über Zulassungsdaten (elektronischer Kraftfahrzeugschein) bis hin zu Zweitnutzungen für Mautgebühren, Parkhauszutritt, elektronische Geldbörse etc. Für alle diese Informationen darf auf die zuvor angesprochene Literaturstelle verwiesen werden, deren Inhalt auch zum Inhalt der vorliegenden Schutzrechtsanmeldung gemacht wird.

Die zuvor erläuterte erweiterte elektronische Chipkarteneinrichtung stellt ungeachtet der flächenmäßigen Abmessungen üblicher ISO-genormter Chipkarten ein eigenständiges neues System dar, das wie erläutert zu Kartenschächten für ISO-genormte Chipkarten nicht korrespondiert. Die Erfindung hat das Problem erkannt, das darin liegt, daß Millionen von passiven Chipkarten und Magnetstreifenkarten existieren, die in erweiterte elektronische Chipkartensysteme integriert werden können oder bereits dafür ausgelegt sind, jedoch nicht zum Konzept der erweiterten elektronischen Chipkarteneinrichtung, das zuvor erläutert worden ist, passen.

Die zuvor aufgezeigte Problematik wird nun erfindungsgemäß mit einer erweiterten elektronischen Chipkarteneinrichtung mit den Merkmalen des Oberbegriffs von Anspruch 1 gelöst, die durch die Merkmale des kennzeichnenden Teils von Anspruch 1 ausgestaltet ist. Kern der Erfindung ist die Trennung der beim System "Smart Card" integrierten Funktionen einer erweiterten elektronischen Chipkarteneinrichtung in zwei Baugruppen, nämlich eine Baugruppe, die durch eine normgerechte passive Chipkarte bekannter Art realisiert ist, und eine zweite Baugruppe, die die gesamte Elektronik der erweiterten elektronischen Chipkarteneinrichtung enthält und als Aufnahmeeinheit mit Gehäuse und Kartenhalterung zum Einführen der normgerechten Chipkarte ausgestaltet ist.

Die Aufnahmeeinheit der erfindungsgemäßen Chipkarteneinrichtung macht es möglich, aus bekannten normgerechten Chipkarten die zuvor angesprochenen erweiterten elektronischen Chipkarteneinrichtungen zu machen, und zwar in einem außerordentlich flexiblen Rahmen durch unterschiedliche Ausgestaltung und Ausstattung der Aufnahmeeinheit.

Durch die erfindungsgemäße Zweiteilung der erweiterten elektronischen Chipkarteneinrichtung ist es möglich, in Verbindung mit einer ISO-genormten Chipkarte und basierend auf deren Authentisierung eine Vielzahl von Funktionen zu realisieren, zu ergänzen oder zu unterstützen, die nicht originär Funktion von solchen passiven normgerechten Chipkarten sind oder jedenfalls in dieser Wirkung oder Ausprägung dem nicht entsprechen.

Die erweiterte elektronische Chipkarteneinrichtung der Erfindung stellt keine körperliche Einheit, aber eine Funktionseinheit von normgerechter Chipkarte und die Elektronik aufnehmender Aufnahmeeinheit (Card-Box) dar. Die Chipkarte hat die Rolle der Authentisierung und ggf. Speicherung entsprechender Daten, die Aufnahmeeinheit (Card-Box) beherbergt die Energieversorgung, die Bedien- und Anzeigeelemente und die dann u. U. sehr leistungsstarken externen Datenaustauscheinheiten.

Bevorzugte Ausgestaltungen und Weiterbildungen der erfindungsgemäßen Chipkarteneinrichtung sind Gegenstand der Unteransprüche. Gegenstand der Erfindung ist insbesondere auch eine Aufnahmeeinheit einer erfindungsgemäßen Chipkarteneinrichtung für sich gemäß Anspruch 9.

Im folgenden wird die Erfindung anhand einer lediglich ein Ausführungsbeispiel darstellenden Zeichnung weiter erläutert. In der Zeichnung zeigt
- Fig. 1: in einer Art Blockdarstellung das Prinzip der erfindungsgemäßen Chipkarteneinrichtung,
- Fig. 2: in perspektivischer Ansicht ein Ausführungsbeispiel einer erfindungsgemäßen Chipkarteneinrichtung, stark schematisien,
- Fig. 3: das Ausführungsbeispiele aus Fig. 2 in Verbindung mit einer ortsfesten Halterung an einem Objekt.

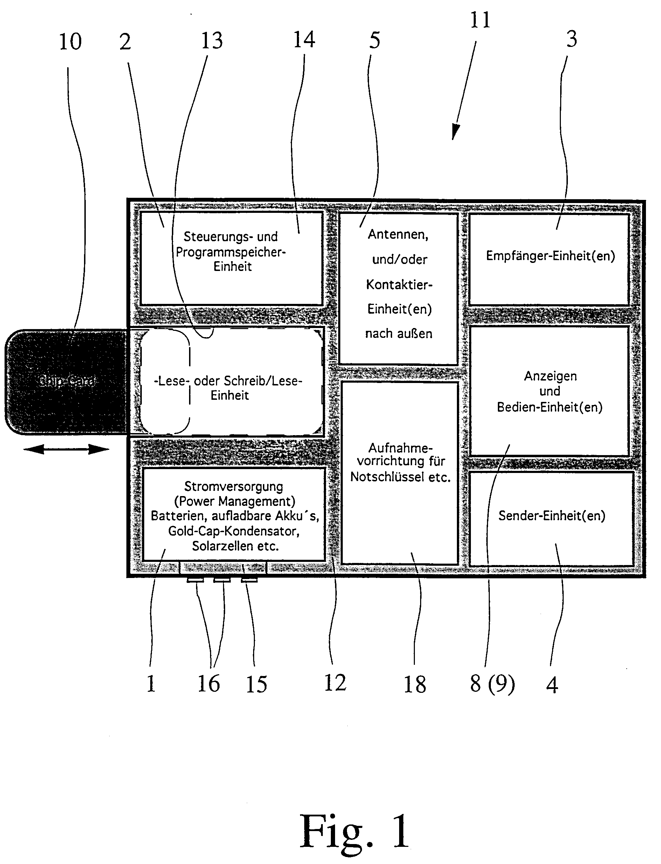

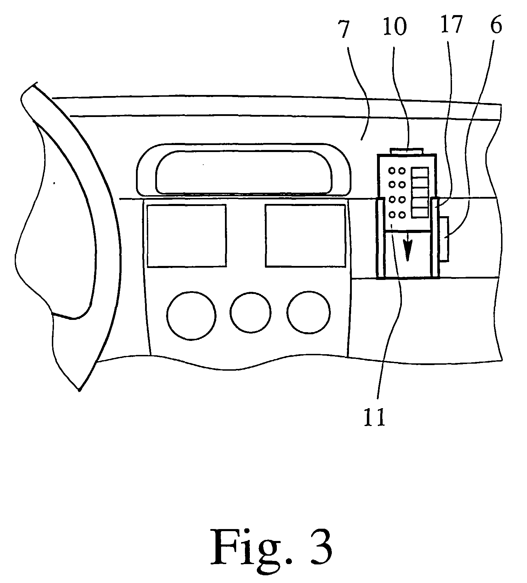

Das in Fig. 1 dargestellte Ausführungsbeispiel einer erweiterten elektronischen Chipkarteneinrichtung, insbesondere für Fahrzeugsicherungssysteme, umfaßt einen Chipträger mit Chip oder Chips darauf, eine Stromversorgungseinheit 1, eine Zentralsteuerungseinheit 2 zur Steuerung der Funktionen und Programme der Chipkarteneinrichtung, sowie eine Datenaustauscheinheit 3 oder mehrere Datenaustauscheinheiten 3, 4, 5 für den Datenaustausch zwischen der Chipkarteneinrichtung und einer Gegenstation 6 an einem Objekt 7 (Fig. 3).

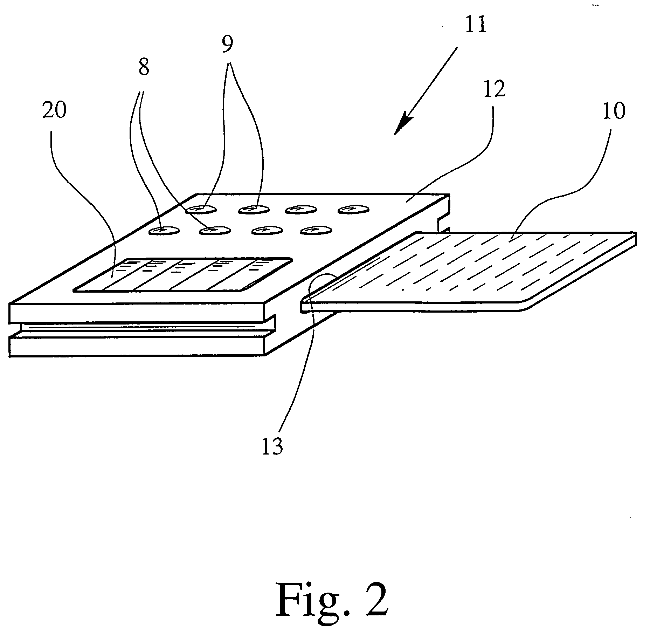

Das dargestellte Ausführungsbeispiel zeigt schematisch weiter eine Einheit für Bedienungselemente 8 zum Auslösen von Funktionen bzw. Befehlen bzw. zur Programmierung (s. auch Fig. 2) sowie eine Einheit mit Anzeigeelementen 9 zur Erfüllung von Anzeigefunktionen.

Für die umfangreichen Ausgestaltungsmöglichkeiten einer solchen erweiterten elektronischen Chipkarteneinrichtung darf auf den zuvor schon angesprochenen Informationsartikel zum System "Smart Card" verwiesen werden.

Wesentlich für die Lehre der Erfindung ist nun, daß die Chipkarteneinrichtung insgesamt zweiteilig ausgeführt ist, nämlich aufweist einerseits eine normgerechte Chipkarte 10 (Chipträger mit darauf befindlichem Chip oder darauf befindlichen Chips; passive, d. h. keine eigene Energieversorgung aufweisende, ISO-konforme Chipkarte), andererseits eine Aufnahmeeinheit 11 mit einem Gehäuse 12, in dem die weiteren Einheiten 1, 2, 3, 4, 5, 8, 9 der Chipkarteneinrichtung angeordnet sind, mit einer im Gehäuse 12 vorgesehenen Kartenhalterung 13 für die normgerechte Chipkarte 10 und mit einer der Kartenhalterung 13 zugeordneten Chipdatenaustauscheinheit 14 zur Realisierung des Datenaustausches zwischen Chipkarte 10 und Aufnahmeeinheit 11.

Fig. 2 zeigt in Verbindung mit Fig. 1 sehr gut erkennbar den wesentlichen Kern der Lehre der Erfindung, nämlich die zweiteilige Ausführung der Chipkarteneinrichtung mit einerseits normgerechter Chipkarte 10 und andererseits umfangreich elektronisch aufgerüsteter Aufnahmeeinheit 11.

Die Chipdatenaustauscheinheit 14 ist im dargestellten Ausführungsbeispiel und entsprechend bevorzugter Lehre als Schreib-/Lese-Einheit ausgeführt.

Weiter weist, wie Fig. 1 andeutungsweise erkennen läßt, die Aufnahmeeinheit 11 eine mit der Stromversorgungseinheit 1 verbundene Aufladeeinheit 15 mit Externanschlüssen 16 für ein Netz- und/oder Ladegerät auf.

Fig. 3 macht deutlich, daß die Aufnahmeeinheit 11 bei entsprechender Ausgestaltung in eine am Objekt 7 angeordnete Halterung 17 einsetzbar ist, hier über vorgesehene Führungen eingeschoben werden kann. Dabei ist im dargestellten Ausführungsbeispiel vorgesehen, daß die Gegenstation 6 des Objekts 7 an der Halterung 17 angeordnet ist. Gleichzeitig ist im dargestellten Ausführungsbeispiel vorgesehen, daß in die Halterung 17 das Netz- und/oder Ladegerät integriert bzw. an die Halterung 17 angeschlossen ist. Die in Fig. 1 angedeuteten Externanschlüsse 16 für die Auflageeinheit 15 kommen durch das Einsetzen der Aufnahmeeinheit 11 in die Halterung 17 dort mit Gegenkontakten in Verbindung, die für Aufladung der Stromversorgung sorgen.

Das in Fig. 1 dargestellte Ausführungsbeispiel zeigt schließlich, daß das Gehäuse 12 der Aufnahmeeinheit 11 ein Fach 18 für einen Notschlüssel od. dgl. aufweist. Alternativ könnte ein Notschlüssel auch in das Gehäuse integriert, beispielsweise ausklappbar sein. Notschlüssel ist hier generalisierend zu verstehen und umfaßt neben mechanischen Schlüsseln auch Transponder od. dgl..

Generell gilt, daß anstelle der Chipkarte 10 eine Magnetstreifenkarte vorgesehen sein kann, wobei dann die Chipdatenaustauscheinheit 14 entsprechend angepaßt ist. Es kann auch vorgesehen sein, daß die Chipdatenaustauscheinheit 14 auf eine passive Chipkarte oder auf eine Magnetstreifenkarte umgestellt werden kann.

Fig. 2 zeigt in dem dortigen Ausführungsbeispiel insoweit noch Besonderheiten, als die obere Reihe Anzeigeelemente 9 (beispielsweise LED's) am Gehäuse 12 zeigt, die darunter befindliche Reihe Bedienelemente 8 (im dargestellten Ausführungsbeispiel Mikrodrucktasten) darstellt, während die untere Fläche mit der Stromversorgungseinheit 1 verbundene Solarzellen 20 zeigt. Man erkennt die Chipkarte 10 im wesentlichen noch außerhalb der Kartenhalterung 13 des Gehäuses 12 der Aufnahmeeinheit 11, sie wird im Normalfall dann weiter in die Kartenhalterung 13 eingeschoben.

Ergänzend ist zu den Funktionen der erfindungsgemäßen erweiterten elektronischen Chipkarteneinrichtung mit normgerechter Chipkarte und Card-Box folgendes auszuführen:

Die erfindungsgemäß in der elektronisch aufgerüsteten Aufnahmeeinheit 11 befindliche Zentralsteuerungseinheit 2 erfüllt Steuerungs-, Programmierungs- und Speicherfunktionen. Sie prüft beispielsweise die Authentisierung der Chipkarte 10 bezüglich der konkreten Aufnahmeeinheit 11 und des zugehörigen Objekts 7, steuert Challenge-/Response-Verfahren und sonstige Datenübertragungen, kodiert und dekodiert etc. Die Stromversorgungseinheit 1 wird ebenso gesteuert wie das Nachladen mittels eines Netz- und/oder Ladegerätes, Bedienelemente 8 und Anzeigeelemente 9 werden angesteuert bzw. freigegeben oder gesperrt, Lese- und Schreibfunktionen in der Chipdatenaustauscheinheit 14 werden aktiviert und deaktiviert. Dazu enthält die Zentralsteuerungseinheit 2 natürlich entsprechende Programmspeicher und Datenspeicher.

Die Datenaustauscheinheiten 3, 4, 5 sind hier als Empfängereinheit 3 beispielsweise für ein Challengesignal, als Sendeeinheit 4 für beispielsweise ein Responsesignal und als Antenne und/oder Kontakteinheit 5 für sonstige Anschlußfunktionen ausgeführt. Diese Einrichtungen sind abhängig von der Übertragungsart (Ultraschall, Infrarot, Funkfrequenzen) und im übrigen von den Leistungsbereichen definiert. Die Gegenstation 6 am Objekt 7, beispielsweise in einem Kraftfahrzeug, ist entsprechend kompatibel ausgeführt, dies ist im Grundsatz alles aus dem Konzept "Smart Card" entnehmbar. Natürlich müssen Verschlüsselungsalgorithmen realisiert sein, um Abhören und Mißbrauch zu verhindern.

Wird die Aufnahmeeinheit 11 mit eingesetzter Chipkarte 10 während des Betriebs eines ihr zugeordneten Objekts 7, z. B. in einem Kraftfahrzeug, in der entsprechenden Halterung 17 aufgenommen, so kann neben einer ständigen Berechtigungs- und/oder Anwesenheitsabfrage natürlich auch die automatische Aufladung der internen Stromversorgungseinheit 1 erfolgen. Natürlich kann man bei entsprechender Ausgestaltung die erfindungsgemäße elektronische Chipkarteneinrichtung zusätzlich nutzen zum Abspeichern objektrelevanter Daten wie in einem elektronischen Bordbuch, zur Nutzung in der Servicecard etc. wie im Stand der Technik schon erläutert. Algorithmen und Mechanismen zur Unbrauchbarmachung fehlerbehafteter, verlorengegangener oder gestohlener Chipkarten 10 sind ebenfalls dem Stand der Technik entnehmbar.

Auch im vorliegenden Umfeld kann man die Chipkarten 10 in Verbindung mit Kreditkartenfunktionen realisieren, beispielsweise Leihfahrzeuge mit einem Kartenzugangssystem ausstatten und die dazu genutzte Chipkarte 10 gleichzeitig zur Verrechnung der Kosten einsetzen. Hier ist es besonders interessant, daß man mit vorhandenen normgerechten Chipkarten 10 arbeiten kann.

## Patentansprüche

1. Erweiterte elektronische Chipkarteneinrichtung, insbesondere für Kraftfahrzeugsicherungssysteme, die selbständig handhabbar und von einem Benutzer mitführbar ist und mit einer normalerweise mit ihr nicht verbundenen Gegenstation (6) an einem Objekt (7) vorübergehend verbindbar ist,
mit einem Chipträger, Chip oder Chips auf dem Chipträger, einer Stromversorgungseinheit (1), einer Zentralsteuerungseinheit (2) zur Steuerung der Funktionen und Programme der Chipkarteneinrichtung und einer Datenaustauscheinheit (3) oder mehreren Datenaustauscheinheiten (3, 4, 5) für den Datenaustausch zwischen der Chipkarteneinrichtung und der Gegenstation (6) an dem Objekt (7),
ggf. außerdem mit Bedienungselementen (8) zum Auslösen von Funktionen bzw. Befehlen bzw. zur Programmierung und/oder mit Anzeigeelementen (9) zur Erfüllung von Anzeigefunktionen,
**dadurch gekennzeichnet,**
daß die Chipkarteneinrichtung zweiteilig ausgeführt ist, nämlich aufweist
einerseits eine normgerechte Chipkarte (10) mit dem Chipträger und dem Chip oder den Chips,
andererseits eine Aufnahmeeinheit (11) mit einem Gehäuse (12), in dem die weiteren Einheiten der Chipkarteneinrichtung angeordnet sind, mit einer im Gehäuse (12) vorgesehenen Kartenhalterung (13) für die normgerechte Chipkarte (10) und mit einer der Kartenhalterung (13) zugeordneten Chipdatenaustauscheinheit (14) für den Datenaustausch zwischen der Chipkarte (10) und der Aufnahmeeinheit (11).

2. Chipkarteneinrichtung nach Anspruch 1, dadurch gekennzeichnet, daß die Chipdatenaustauscheinheit (14) als Schreib-/Leseeinheit ausgeführt ist.

3. Chipkarteneinrichtung nach Anspruch 1 oder 2, dadurch gekennzeichnet, daß die Aufnahmeeinheit (11) weiter eine mit der Stromversorgungseinheit (1) verbundene Aufladeeinheit (15) mit Externanschlüssen (16) für ein Netz- und/oder Ladegerät aufweist.

4. Chipkarteneinrichtung nach einem der Ansprüche 1 bis 3, dadurch gekennzeichnet, daß die Aufnahmeeinheit (11) in eine am Objekt (7) anordenbare oder angeordnete Halterung (17) einsetzbar ist

5. Chipkarteneinrichtung nach Anspruch 4, daß die Gegenstation (6) des Objekts (7) an der Halterung (17) angeordnet ist.

6. Chipkarteneinrichtung nach Anspruch 4 oder 5, dadurch gekennzeichnet, daß in die Halterung (17) das Netz- und/oder Ladegerät integriert ist.

7. Chipkarteneinrichtung nach einem der Ansprüche 1 bis 6, dadurch gekennzeichnet, daß das Gehäuse (12) der Aufnahmeeinheit (11) ein Fach (18) für einen Notschlüssel aufweist oder daß ein Notschlüssel in das Gehäuse integriert, beispielsweise einklappbar im Gehäuse angeordnet ist.

8. Chipkarteneinrichtung nach einem der Ansprüche 1 bis 7, dadurch gekennzeichnet, daß anstelle der Chipkarte (10) eine Magnetstreifenkarte vorgesehen und die Chipdatenaustauscheinheit (14) entsprechend angepaßt oder auf Magnetstreifen umstellbar ist.

9. Aufnahmeeinheit einer erweiterten elektronischen Chipkarteneinrichtung nach einem der Ansprüche 1 bis 8.
